# EUROPEAN PATENT APPLICATION

(11) **EP 2 754 611 A1**
(43) Date of publication of application: **16.07.2014**
(21) Application number: 13150782.4
(22) Date of filing: 10.01.2013
(51) Int. Cl.: B64D 13/06, B64D 13/02

(54) **Aircraft air conditioning system and method of operating an aircraft air conditioning system**

(71) Applicant: Airbus Operations GmbH, 21129 Hamburg (DE)
(72) Inventor: Kelnhofer, Jürgen, 21129 Hamburg (DE)
(74) Representative: Schicker, Silvia

(57) **Abstract**

An aircraft air conditioning system (100) comprises a compressor (40) which is adapted to generate compressed process air, an air conditioning unit (10) which is adapted to cool and expand compressed process air supplied to the air conditioning unit (10) from the compressor (40), and an energy converter (44) which is adapted to convert hydraulic energy into electric energy. The compressor (40) is supplied with electric energy generated by the energy converter (44) by converting hydraulic energy supplied to the energy converter (44).

## Description

The present invention relates to an aircraft air conditioning system and a method for operating an aircraft air conditioning system.

So-called air-based air conditioning systems, as described for example in DE 10 2008 053 320 A1 or US 2010/101251 A1 and DE 10 2010 054 448 A1 or WO 2012/079756 A1, are usually used at present in commercial aircraft to air-condition the aircraft cabin. An aircraft air conditioning system serves to cool the aircraft cabin, which would otherwise be overheated due to thermal loads, such as, for example, body heat of the passengers and waste heat from equipment present on board the aircraft. The aircraft air conditioning system in addition adequately supplies fresh air into the aircraft cabin to ensure that a prescribed minimum proportion of oxygen is present in the aircraft cabin.

Air-based air conditioning systems typically comprise an air conditioning unit. The air conditioning unit is supplied with compressed process air that is generated by a compressor driven by electric energy generated by engine generators of the aircraft as described in US 7,207,521 B2 or US 7,210,653 B2, or bled of from an engine or an auxiliary power unit (APU) of the aircraft. Prior to being supplied to the air conditioning unit, the compressed process air usually is directed through a heat exchanger, a so-called pre-cooler, so as to pre-cool the hot process air to a desired reduced temperature. In the air conditioning unit, the process air, upon flowing through at least one heat exchanger as well as through various compression and expansion units, is cooled and expanded. Cooled process air exiting the air conditioning unit finally is supplied to a mixing chamber where it is mixed with recirculation recirculated from an aircraft region to be air conditioned. The mixed air from the mixing chamber, via respective mixed air lines, is supplied to the aircraft region to be air conditioned which may be divided into a plurality of air conditioning zones.

The invention is directed at the object of specifying a lightweight and cost effective aircraft air conditioning system. Further, the invention is directed at the object of providing a method of operating an aircraft air conditioning system of this kind.

This object is achieved by an aircraft air conditioning system having the features of claim 1 and a method of operating an aircraft air conditioning system having the features of claim 6.

An aircraft air conditioning system according to the invention comprises a compressor which is adapted to generate compressed process air. The compressed process air generated by the compressor is supplied to an air conditioning unit of the aircraft air conditioning system which is adapted to cool and expand the compressed process air supplied to the air conditioning unit from the compressor. Further, the aircraft air conditioning system comprises an energy converter which is adapted to convert hydraulic energy into electric energy. The compressor is supplied with electric energy generated by the energy converter by converting hydraulic energy supplied to the energy converter.

The compressor of the aircraft air conditioning system is formed separate from the engines of the aircraft. Hence, upon controlling the operation of the engines, it is not necessary to take into account the discharge of bleed air for supplying the air conditioning unit of the air conditioning system with process air. Further, by using an energy converter for supplying the compressor with electric energy, the compressor is also electrically decoupled from the engines, i.e. the engine generators do not have to provide electric energy for driving the compressor. As a result, the operating parameters of the engines can be optimized in view of the actual function of the engines, allowing a more efficient and thus fuel saving operation of the engines.

Moreover, by using a compressor which is formed separate from the engines of the aircraft for generating compressed process air to be supplied to the air conditioning unit of the aircraft air conditioning system, a bleed air system for discharging hot compressed bleed air from the engines and a suitable line system for supplying the hot compressed bleed air to the air conditioning unit of the air conditioning system can be dispensed with. In addition, it is not necessary to provide a overheat detection system for detecting leakages in the bleed air system and the line system for supplying the hot compressed bleed air to the air conditioning unit of the air conditioning system. Contrary to the engines of the aircraft, the energy converter providing the electric energy for driving the compressor may be installed within the aircraft fuselage close to the compressor. An electric line system connecting the compressor to the energy converter thus may be designed much more lightweight than an electric line system connecting the compressor to the engine generators, in particular in view of the high weight of the electrical line resulting from the high performance requirements of the compressor. In summary, the aircraft air conditioning system according to the invention distinguishes by a simple and thus cost effective structure and a particularly low weight.

The energy converter may be designed in the form of a hydraulic generator. For example, the energy converter may comprise a turbine which is adapted to be driven by a hydraulic fluid flow supplied to the energy converter. The turbine may be connected to a generator via a turbine/generator shaft. A rotor of the generator may be attached to the turbine/generator shaft so as to allow a rotation of the rotor relative to a stator of the generator and hence the generation of electric energy.

The aircraft air conditioning system may comprise a hydraulic line which is connected to the energy converter so as to supply the energy converter with pressurized hydraulic fluid. For example, the hydraulic line may be connected to a turbine of the energy converter such that the turbine may be driven by the pressurized hydraulic fluid flowing through the hydraulic line. For pressurizing the hydraulic fluid flowing through the hydraulic line, a pump or another suitable pressurization device which is capable of pressurizing a hydraulic fluid may be disposed in the hydraulic line upstream of the energy converter. The pressure of the hydraulic fluid flowing through the hydraulic line may be controlled as desired, for example, by suitably controlling the operation of the pump or the pressurization device. Alternatively or additionally thereto, at least one suitable valve may be disposed in the hydraulic line, the at least one valve being adapted to vary the flow cross section of the hydraulic line so as to control the pressure of the hydraulic fluid flowing through the hydraulic line. The operation of the pump or the pressurization device and/or the operation of the at least one valve may be controlled by means of a suitable control unit, preferably an electronic control unit.

Preferably, the energy converter is integrated into an existing hydraulic system of the aircraft. By integrating the energy converter into an existing hydraulic system of the aircraft the number of additional components which have to be provided to supply the energy converter with hydraulic energy and hence the weight of the aircraft air conditioning system can be minimized. Basically, it is conceivable to integrate the energy converter into any hydraulic system present on board the aircraft provided the hydraulic lines and the other hydraulic components such as, for example, pumps or valves of the hydraulic system are capable of withstanding the pressure of the hydraulic fluid at which the hydraulic fluid has to be supplied to the energy converter so as to ensure a proper function of the energy converter, i.e. so as to ensure that the energy converter is supplied with a sufficient amount of hydraulic energy which allows the energy converter to generate a sufficient amount of electric energy for driving the compressor of the aircraft air conditioning system.

The aircraft air conditioning system may further comprise an ambient air supply line which is connected to the compressor so as to supply the compressor with ambient air. In an aircraft which is equipped with the aircraft air conditioning system, the aircraft cabin then is supplied with clean ambient air enhancing the air quality within the aircraft cabin.

In a method of operating an aircraft air conditioning system, compressed process air is generated by means of a compressor. The compressed process air generated by the compressor is cooled and expanded in an air conditioning unit. By means of an energy converter, hydraulic energy supplied to the energy converter is converted into electric energy. The electric energy generated by the energy converter by converting hydraulic energy is supplied to the compressor.

The energy converter may be designed in the form of a hydraulic generator.

Pressurized hydraulic fluid may be supplied to the energy converter via a hydraulic line which is connected to the energy converter.

The energy converter may be integrated into an existing hydraulic system of the aircraft.

Ambient air may be supplied to the compressor via an ambient air supply line which is connected to the compressor.

A preferred embodiment of the invention in the following will be described in more detail with reference to the appended schematic drawings, in which
- Figure 1: shows an illustration of the construction and the functional principle of an air conditioning unit suitable for use in an aircraft air conditioning system; and
- Figure 2: shows an aircraft air conditioning system comprising an air conditioning unit according to Figure 1.

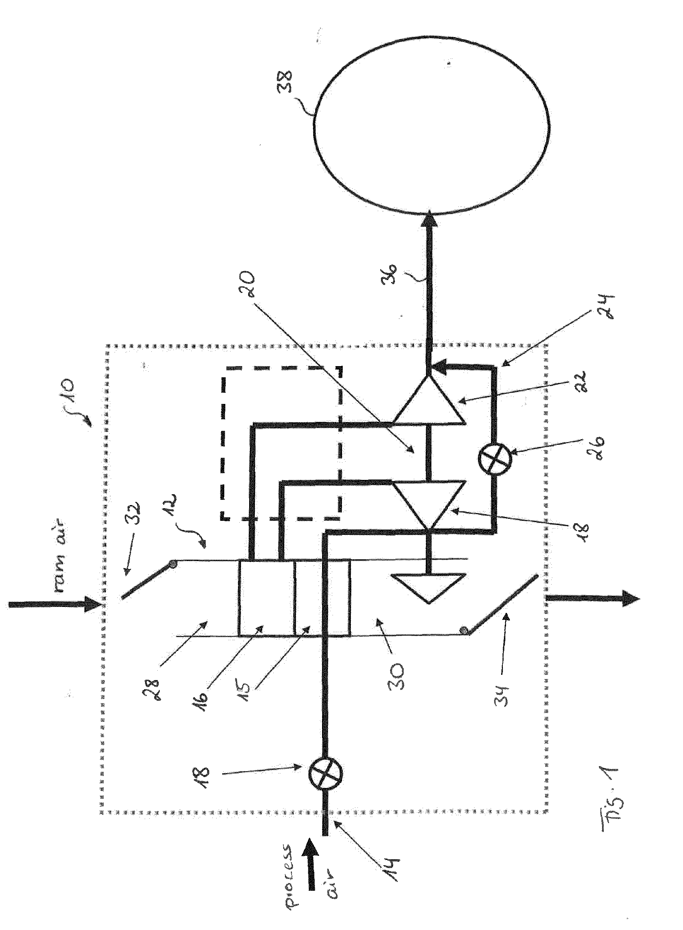

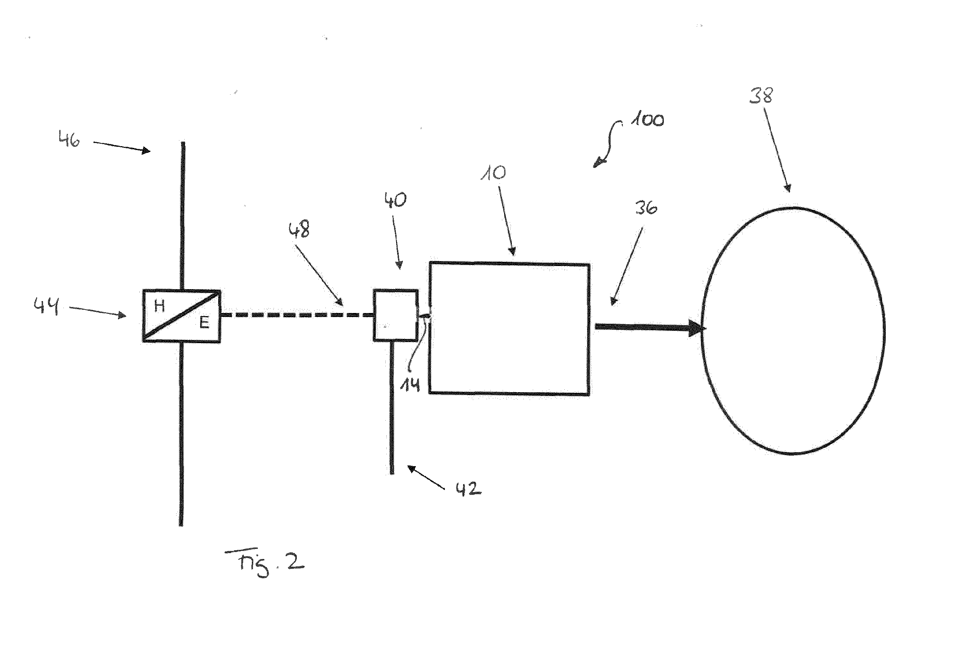

Figure 1 shows an air conditioning unit 10 suitable for use in an aircraft air conditioning system 100 according to Figure 2. In the air conditioning unit 10, hot process air is supplied to a heat exchanger unit 12 by way of a process air line 14. In the exemplary air conditioning unit 10 shown in Figure 2, the heat exchanger unit 12 comprises a first heat exchanger 15 and a second heat exchanger 16. A control valve 18 controls the process air flow through the process air line 14. During operation of the air conditioning unit 10, the process air flowing through the process air line 14 at first is supplied to the first heat exchanger 15 for cooling.

After flowing through the first heat exchanger 15, the process air is conducted into a compressor 18 of a compressor/turbine unit 20. The process air which is compressed by the compressor 18 and, at the same time, heated, is cooled again as it flows through the second heat exchanger 16 and finally undergoes expansion and further cooling in a turbine 22 of the compressor/turbine unit 20. Process air exiting the first heat exchanger 15 may be conducted past the compressor/turbine unit 20 via a bypass line 24. The process air flow through the bypass line 24 is controlled by means of a bypass valve 26. Opening the bypass valve 26 causes the warmer air flowing through the process air line 14 upstream of the compressor/turbine unit 20 to be supplied to a region of the process air line 14 which is located downstream of the compressor/turbine unit 20.

The hot process air supplied to the heat exchangers 15, 16 of the heat exchanger unit 12 is cooled by thermal energy transfer to cold aircraft ambient air flowing through the heat exchanger unit 12. The aircraft ambient air is supplied to the heat exchanger unit 12 through a ram air inlet channel 28. After flowing through the heat exchanger unit 12, the ambient air heated by emitting its cooling energy to the hot process air leaves the aircraft through a ram air outlet channel 30. The cooling capacity of the heat exchanger unit 12 of the air conditioning unit 10 may be controlled by suitably controlling the mass flow of cool ambient air through the heat exchanger unit 12. In particular, the mass flow of ambient air through the heat exchanger unit 12 may be controlled by suitably adjusting the position of ram air channel flaps 32, 34 controlling the flow cross-sections of the ram air inlet channel 28 and the ram air outlet channel 30, respectively. In addition, the temperature of the cooled process air exiting the air conditioning unit 10 may be controlled by suitably controlling the compressor/turbine unit 30, the valve 26 and further internal valves (not shown in Figure 2) of the air conditioning unit 10. The cooled process air exiting the air conditioning unit 10, via an air discharge line 36, is supplied to an aircraft region 38 to be air conditioned.

A maximum cooling capacity of the air conditioning unit 10, i.e. a minimum process air temperature at the outlet of the air conditioning unit 10, is achieved if the ram air channel flaps 32, 34 are maximally opened and the internal valves, in particular the bypass valve 26, are closed. On the other hand, a nominal cooling capacity of the air conditioning unit 10 is defined as a cooling capacity which is delivered by the air conditioning unit 10 when the ram air channel flaps 32, 34 are minimally opened and the internal valves, in particular the bypass valve 26, are closed. Since air conditioning units which are provided for use in aircraft air conditioning systems are conventionally designed for fault scenarios, their nominal cooling capacity generally exceeds the cooling capacity requirement prevailing in normal operation of the aircraft. It is therefore frequently necessary to open internal valves, in particular the bypass valve 26, during operation of an air conditioning unit 10, even if the ram air channel flaps 32, 34 are only minimally opened, in order to ensure that the process air leaves the air conditioning unit 10 at the desired temperature and not at too low a temperature.

As becomes apparent from Figure 2, in the aircraft air conditioning system 100, the air conditioning unit 10, via the process air line 14, is supplied with hot compressed process air from a compressor 40. The compressor 40 is formed separate from engines of the aircraft and is connected to an ambient air supply line 42. During operation, the compressor 40 draws in ambient air from the aircraft environment through the ambient air supply line 42 and compresses the ambient air to an elevated pressure at which the ambient air is suitable to be supplied to the air conditioning unit 10.

Further, the aircraft air conditioning system 100 comprises an energy converter 44 which is adapted to convert hydraulic energy into electric energy and which is disposed in a hydraulic line 46. The hydraulic line 46 is flown through by a pressurized hydraulic fluid. For pressurizing the hydraulic fluid flowing through the hydraulic line 46, a pump or another suitable pressurization device which is capable of pressurizing a hydraulic fluid (not shown in Figure 2) is disposed in the hydraulic line 46 upstream of the energy converter 44. The pressure of the hydraulic fluid flowing through the hydraulic line 46 is controlled by suitably controlling the operation of the pump or the pressurization device. Alternatively or additionally thereto, at least one suitable valve (not shown in Figure 2) may be disposed in the hydraulic line 46, the at least one valve being adapted to vary the flow cross section of the hydraulic line 46 so as to control the pressure of the hydraulic fluid flowing through the hydraulic line 46. The operation of the pump or the pressurization device and/or the operation of the at least one valve may be controlled by means of a suitable control unit (not shown in Figure 2).

The hydraulic line 46 and the energy converter 44 are integrated into an existing hydraulic system of the aircraft. Hence, the number of additional components which have to be provided to supply the energy converter 44 with hydraulic energy and thus the weight of the aircraft air conditioning system 100 can be minimized.

In the exemplary embodiment of an aircraft air conditioning system 100 shown in Figure 2, the energy converter 44 is designed in the form of a hydraulic generator comprising a turbine which is adapted to be driven by the hydraulic fluid flow supplied to the energy converter via the hydraulic line 46. The electric energy generated by the energy converter 44 is supplied to the compressor 40 via an electric line 48. In the aircraft air conditioning system 100, the compressor 40 is not only formed separate from engines of the aircraft, but also electrically decoupled from the engines of the aircraft, i.e. engine generators of the engines do not have to provide electric energy for driving the compressor 40. Instead, the energy converter 44 constitutes an independent source of electric energy for driving the compressor 40.

## Claims

1. An aircraft air conditioning system (100) comprising:
- a compressor (40) which is adapted to generate compressed process air,
- an air conditioning unit (10) which is adapted to cool and expand compressed process air supplied to the air conditioning unit (10) from the compressor (40), and
- an energy converter (44) which is adapted to convert hydraulic energy into electric energy, wherein the compressor (40) is supplied with electric energy generated by the energy converter (44) by converting hydraulic energy supplied to the energy converter (44).

2. The aircraft air conditioning system according to claim 1,
wherein the energy converter (44) is designed in the form of a hydraulic generator.

3. The aircraft air conditioning system according to claim 1 or 2,
further comprising:
- a hydraulic line (46) which is connected to the energy converter (44) so as to supply the energy converter (44) with pressurized hydraulic fluid.

4. The aircraft air conditioning system according to any one of claims 1 to 3,
wherein the energy converter (44) is integrated into an existing hydraulic system of the aircraft.

5. The aircraft air conditioning system according to any one of claims 1 to 4,
further comprising:
- an ambient air supply line (42) which is connected to the compressor (40) so as to supply the compressor (40) with ambient air.

6. A method of operating an aircraft air conditioning system (100), the method comprising:
- generating compressed process air by means of a compressor (40),
- cooling and expanding compressed process air generated by the compressor (40) in an air conditioning unit (10),
- converting hydraulic energy into electric energy by means of an energy converter (44), and
- supplying electric energy generated by the energy converter (44) by converting hydraulic energy to the compressor (40).

7. The method according to claim 6,
wherein the energy converter (44) is designed in the form of a hydraulic generator.

8. The method according to claim 6 or 7,
further comprising:
- supplying pressurized hydraulic fluid to the energy converter (44) via a hydraulic line (46) which is connected to the energy converter (44).

9. The method according to any one of claims 6 to 8,
wherein the energy converter (44) is integrated into an existing hydraulic system of the aircraft.

10. The method according to any one of claims 6 to 9,
further comprising:
- supplying ambient air to the compressor (40) via an ambient air supply line (42) which is connected to the compressor (40).
